# EUROPÄISCHE PATENTSCHRIFT

(11) **EP 1 379 953 B1**
(45) Veröffentlichungstag und Bekanntmachung des Hinweises auf die Patenterteilung: **23.02.2005**
(21) Anmeldenummer: 02737778.7
(22) Anmeldetag: 09.04.2002
(51) Int. Cl.: G06F 11/36

(54) **PROGRAMMGESTEUERTE EINHEIT**
PROGRAM-CONTROLLED UNIT
UNITE A COMMANDE PROGRAMMEE

(30) Priorität: 20.04.2001 DE 10119265
(43) Veröffentlichungstag der Anmeldung: 14.01.2004
(73) Patentinhaber: Infineon Technologies AG, 81669 München (DE)
(72) Erfinder: MAIER, Klaus, D., Deal, Kent CT14 7ET (GB); KÖNIG, Dietmar, 81543 München (DE); KOLOF, Andreas, 82194 Gröbenzell (DE); MAYER, Albrecht, 82041 Deisenhofen (DE)
(74) Vertreter: Repkow, Ines, Dr. Dipl.-Ing.
(86) Internationale Anmeldenummer: PCT/DE2002/001296
(87) Internationale Veröffentlichungsnummer: WO 2002/086728

(56) Entgegenhaltungen:
- EP-A- 1 016 969
- EP-A- 1 058 189
- EP-A- 1 091 298
- US-A- 6 094 729
- US-B1- 6 185 732

## Beschreibung

Die vorliegende Erfindung betrifft eine Vorrichtung gemäß dem Oberbegriff des Patentanspruchs 1, d.h. eine programmgesteuerte Einheit, durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben oder in dieser gespeichert werden.

Programmgesteuerte Einheiten wie Mikroprozessoren, Mikrocontroller, Signalprozessoren etc. sind seit vielen Jahren in unzähligen Ausführungsformen bekannt.

Ein bekanntes Problem von programmgesteuerten Einheiten besteht darin, daß darin auftretende Fehler häufig nicht ohne weiteres lokalisierbar und/oder behebbar sind.

Die Lokalisierung und Behebung von in programmgesteuerten Einheiten auftretenden Fehlern erfolgte früher und teilweise auch jetzt noch unter Verwendung spezieller Bond-Out-Versionen der zu untersuchenden programmgesteuerten Einheiten. Bond-Out-Versionen von programmgesteuerten Einheiten unterscheiden sich von den in Massenprodukten eingesetzten Standard-Versionen der betreffenden programmgesteuerten Einheiten dadurch, daß sie mehr Ein- und/oder Ausgabeanschlüsse aufweisen, wobei die zusätzlichen Ein- und/oder Ausgabeanschlüsse mit in der Standard-Version der programmgesteuerten Einheit nicht frei zugänglichen Stellen der programmgesteuerten Einheit verbunden sind. Dadurch können Informationen über interne Zustände oder Vorgänge, genauer gesagt normalerweise nicht ausgegebene Adressen, Daten und/oder Steuersignale wie beispielsweise, aber bei weitem nicht ausschließlich der jeweils aktuelle Stand des Program Counter, aus der programmgesteuerten Einheit ausgegeben und außerhalb der programmgesteuerten Einheit ausgewertet werden. Durch die Auswertung der Informationen läßt sich der Verlauf der innerhalb der programmgesteuerten Einheit ablaufenden Vorgänge verfolgen, wodurch in der programmgesteuerten Einheit auftretende Fehler lokalisiert und behoben werden können.

Die Verwendung von Bond-Out-Versionen ist jedoch mit einer Reihe von Nachteilen verbunden. Insbesondere sind die Bond-Out-Versionen von programmgesteuerten Einheiten größer und teurer als die Standard-Versionen, und, was noch wichtiger ist, verhalten sich die Bond-Out-Versionen in der Regel nicht exakt so wie die Standard-Versionen.

Man ist daher teilweise dazu übergegangen, programmgesteuerte Einheiten mit Debug-Ressourcen auszustatten, welche aus der programmgesteuerten Einheit zur Fehlerlokalisierung und Fehlerbehebung benötigte Informationen extrahieren und über eine nur wenige Pins umfassende und teilweise auch für andere Zwecke benutzbare Schnittstelle aus der programmgesteuerten Einheit ausgeben oder in dieser speichern.

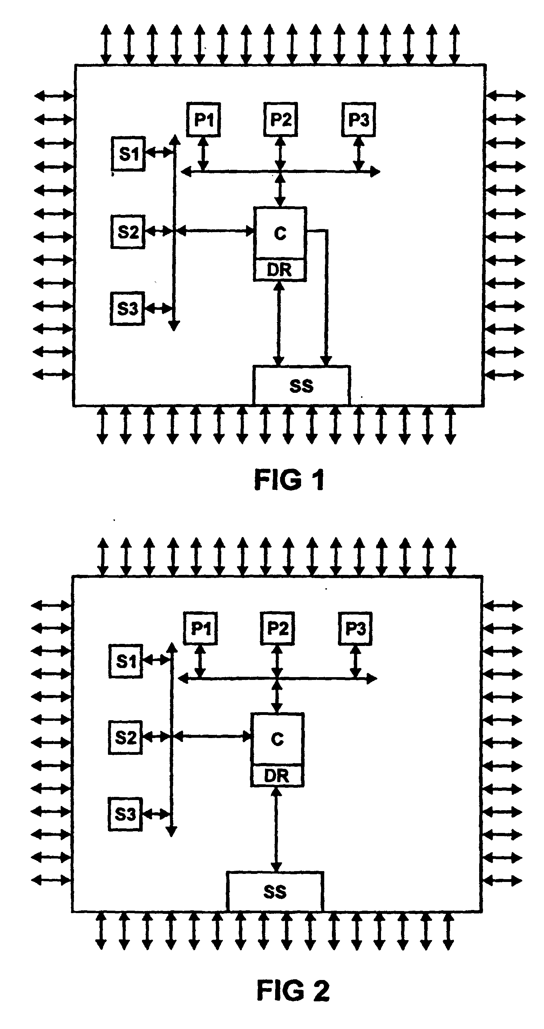

Eine solche programmgesteuerte Einheit ist in Figur 2 dargestellt.

Die in der Figur 2 gezeigte programmgesteuerte Einheit ist ein Mikrocontroller und enthält einen Core C, über einen ersten Bus BUS1 mit dem Core C verbundene Peripherieeinheiten P1, P2, P3, über einen zweiten Bus BUS2 mit dem Core C verbundene Speichereinrichtungen S1, S2, S3, mit dem Core C in Verbindung stehende Debug-Ressourcen DR, und eine den Debug-Ressourcen DR zugeordnete Schnittstelle SS, über welche die Debug-Ressourcen DR an eine externe Einrichtung auszugebende Daten ausgeben, und über welche die Debug-Ressourcen DR von der externen Einrichtung gesteuert werden.

Die Peripherieeinheiten P1 bis P3 sind beispielsweise ein A/D-Wandler, ein Timer, ein Codierer, eine Komprimierungseinrichtung, eine CAN-Schnittstelle, oder sonstige in Mikrocontroller integrierbare Einheiten; die Speichereinrichtungen sind beispielsweise ein RAM, ein ROM, und ein Flash-Speicher.

Die Debug-Ressourcen DR sind vorzugsweise in der Lage, sogenannte Trace-Informationen auszugeben. Hierzu wird durch die Debug-Ressourcen DR das Auftreten von von außerhalb der programmgesteuerten Einheit vorgebbaren Bedingungen innerhalb des Core der programmgesteuerten Einheit überwacht, und jedesmal, wenn die Bedingung oder eine der Bedingungen erfüllt ist, ohne eine Unterbrechung des Betriebes der programmgesteuerten Einheit von außerhalb der programmgesteuerten Einheit vorgebbare Adressen, Daten und/oder Steuersignale aus der programmgesteuerten Einheit ausgegeben. Dadurch ist es beispielsweise, aber bei weitem nicht ausschließlich möglich, daß die Debug-Ressourcen DR jedesmal, wenn der Core Daten von einer bestimmten Adresse oder einem bestimmten Adreßbereich lesen möchte, die dem Core daraufhin zugeführten Daten aus der programmgesteuerten Einheit ausgeben.

Im allgemeinen führen die Debug-Ressourcen DR darüber hinaus auch noch weitere Aktionen aus, die für die Lokalisierung und Behebung von in der programmgesteuerten Einheit auftretenden Fehlern notwendig oder hilfreich sind. So sind die Debug-Ressourcen DR beispielsweise in der Lage, die programmgesteuerte Einheit beim Auftreten bestimmter Bedingungen, beispielsweise bei Erreichen eines bestimmten Program-Counter-Standes anzuhalten und die Inhalte von interessierenden Registern auszulesen oder zu verändern.

Solche, auch als OCDS-Module bezeichneten Debug-Ressourcen sind bekannt, so daß auf die Beschreibung weiterer Einzelheiten verzichtet wird.

Aufgrund der zunehmenden Bedeutung des Vorsehens von Debug Ressourcen in programmgesteuerten Einheiten wurde von der IEEE Industry Standards and Technology Organization (IEEE-ISTO) in 1999 ein als "The Nexus 5001 Forum Standard for a Global Embedded Processor Debug Interface" bezeichneter Standard für das Interface (die Schnittstelle SS) definiert, über welches die Debug-Ressourcen mit einer außerhalb der programmgesteuerten Einheit vorgesehenen Einrichtung, beispielsweise mit einer Debug- oder Emulations-Steuereinheit, oder mit einem Meßgerät wie etwa einem Logikanalysator auf besonders effiziente Art und Weise Daten austauschen können.

Die Debug-Ressourcen und das NEXUS-Interface ermöglichen es mit einem verhältnismäßig geringen Aufwand, in programmgesteuerten Einheiten auftretende Fehler zu erkennen und zu beheben.

Nichtdestotrotz können der Aufbau und der Betrieb der Debug-Ressourcen DR vor allem bei komplexeren programmgesteuerten Einheiten, beispielsweise bei programmgesteuerten Einheiten mit mehreren Cores sehr aufwendig und kompliziert werden. Problematisch ist hierbei insbesondere die Beschaffung und Ausgabe der Trace-Infomationen: es kann erforderlich sein, daß eine sehr große Menge an Trace-Informationen aus der programmgesteuerten Einheit ausgegeben werden muß, um in der programmgesteuerten Einheit auftretende Fehler zu lokalisieren und zu beheben zu können, und darüber hinaus kann sich auch die Definition der Bedingungen, auf deren Auftreten hin Trace-Informationen auszugeben sind, als sehr kompliziert oder ganz unmöglich erweisen.

Der vorliegenden Erfindung liegt daher die Aufgabe zugrunde, eine Möglichkeit zu finden, durch welche die Menge der Trace-Informationen, die ausgegeben werden müssen, um in der programmgesteuerten Einheit auftretende Fehler zu lokalisieren und zu beheben zu können, gering gehalten werden kann.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die auszugebenden oder zu speichernden Trace-Informationen und/oder der Zeitpunkt der Ausgabe oder der Speicherung der Trace-Informationen zumindest teilweise durch das von der programmgesteuerten Einheit ausgeführte Programm bestimmt werden.

Dies erweist sich in zweifacher Hinsicht als vorteilhaft:

Einerseits können dadurch Trace-Informationen erhalten werden, die mangels Vorliegen von diese repräsentierenden Adressen, Daten und/oder Steuersignalen im Core oder mangels Zugriffsmöglichkeiten darauf durch die bekannten Debug-Ressourcen nicht ausgegeben werden könnten, und, wenn überhaupt, durch eine Auswertung von von den Debug-Ressourcen ausgegebenen Trace-Informationen ermittelt werden könnten, wobei die hierfür bereitzustellenden und auszuwertenden Trace-Informationen einen beträchtlichen Umfang annehmen können. Beispiele für solche Informationen sind Zwischenergebnisse, oder die Anzahl der Durchläufe von keinen Schleifenzähler aufweisenden Schleifen, die Anzahl der Aufrufe eines bestimmten Unterprogrammes etc.

Andererseits kann bei einer durch Befehle veranlaßten Ausgabe oder Speicherung von Trace-Informationen erreicht werden, daß Trace-Informationen ausschließlich während der Ausführung von Programmabschnitten ausgegeben oder gespeichert werden, in welchen der zu lokalisierende und zu behebende Fehler vermutet wird.

Durch die genannten Punkte kann erreicht werden, daß nur wirklich interessierende Trace-Informationen, und mithin auch nur die unbedingt erforderliche Menge an Trace-Informationen aus der programmgesteuerten Einheit ausgegeben oder in dieser gespeichert werden.

Die herkömmlichen oder sonstige Debug-Ressourcen können, müssen aber nicht zusätzlich vorgesehen werden. Wenn sie vorgesehen sind, können sie einfacher aufgebaut sein und bedient werden als es bisher der Fall ist, da ja noch weitere Möglichkeiten bestehen, die Ausgabe oder Speicherung von Trace-Informationen zu veranlassen.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: den Aufbau der im folgenden näher beschriebenen programmgesteuerten Einheit, und
- Figur 2: den Aufbau der eingangs beschriebenen herkömmlichen programmgesteuerten Einheit.

Bei der im folgenden beschriebenen programmgesteuerten Einheit handelt es sich um einen Mikrocontroller. Die nachfolgend beschriebenen Besonderheiten des Mikrocontrollers, genauer gesagt die nachfolgend beschriebenen Besonderheiten der darin vorgesehenen Debug-Ressourcen lassen sich jedoch auch bei beliebigen anderen programmgesteuerten Einheiten einsetzen.

Die im folgenden beschriebene programmgesteuerte Einheit ist schematisch in Figur 1 dargestellt. Der Vollständigkeit halber sei darauf hingewiesen, daß nur die vorliegend besonders interessierenden Komponenten der programmgesteuerten Einheit gezeigt sind und beschrieben werden.

Die in der Figur 1 gezeigte programmgesteuerte Einheit entspricht nahezu vollständig der in der Figur 2 gezeigten programmgesteuerten Einheit. Mit den gleichen Bezugszeichen bezeichnete Komponenten sind identische oder einander entsprechende Komponenten.

Der Vollständigkeit halber sei angemerkt, daß die Schnittstelle SS eine nach dem eingangs erwähnten NEXUS-Standard aufgebaute Schnittstelle ist. Es könnte sich jedoch auch um eine beliebige andere Schnittstelle handeln, beispielsweise um eine JTAG-Schnittstelle.

Die programmgesteuerte Einheit gemäß Figur 1 weist gegenüber der programmgesteuerten Einheit gemäß Figur 2 einen sehr wesentlichen Unterschied auf. Dieser Unterschied besteht darin, daß die programmgesteuerte Einheit gemäß Figur 1 eine Verbindung zwischen dem Core C und der Schnittstelle SS aufweist.

Diese Verbindung ermöglicht es, daß der Core C der Schnittstelle SS Daten zuführen kann, die von der Schnittstelle SS wie von den Debug-Ressourcen DR an die Schnittstelle SS ausgegebenen Daten behandelt werden, also in NEXUS-Messages umgesetzt und aus der programmgesteuerten Einheit ausgegeben werden.

Die Datentransfers vom Core C zur Schnittstelle SS werden im betrachteten Beispiel durch entsprechende Befehle veranlaßt, die in das zu debuggende Programm (in das während der Untersuchung der programmgesteuerten Einheit auszuführende Programm) eingefügt sind.

Die eingefügten Befehle können "normale" mov-Befehle, oder speziell für diesen Zweck vorgesehene Befehle sein.

Die Informationen, die durch diese Befehle zur Schnittstelle SS und von dieser weiter an eine außerhalb der programmgesteuerten Einheit vorgesehene Einrichtung übertragen werden, können beliebige Informationen sein, die für das Erkennen, Lokalisieren und/oder Beheben von in der programmgesteuerten Einheit auftretenden Fehlern nützlich sind, also beispielsweise die Werte von bestimmten Variablen, oder Ergebnisse oder Zwischenergebnisse von Berechnungen.

Die Messages, die durch die Schnittstelle SS aus den vom Core C zur Schnittstelle SS übertragenen Daten generiert und aus der programmgesteuerten Einheit ausgegeben werden, sind so aufgebaut, daß ihnen entnehmbar ist, welche Information die jeweiligen Daten repräsentieren, also beispielsweise ob die Daten den Wert einer Variablen A darstellen, oder eine bestimmte Eigenschaft einer Variablen B, oder die Anzahl der Durchläufe einer Schleife, oder das wievielte Mal gerade ein bestimmtes Unterprogramm ausgeführt wird, usw.

Dies geschieht dadurch, daß die eigentlich auszugebenden Daten zusammen mit einem Code übertragen werden, der angibt, um welche Art von Daten es sich jeweils handelt. Im betrachteten Beispiel ist der Code 4 Bits lang; er kann aber selbstverständlich auch länger oder kürzer sein.

Durch den 4 Bits umfassenden Code kann dem Empfänger der Message signalisiert werden, welche Bedeutung die eigentlich zu übertragenden Daten haben. Hierzu muß nur eine eindeutige Zuordnung zwischen den (im betrachteten Beispiel insgesamt 16 verschiedenen) Codes und der Bedeutung der zusammen mit diesen Codes übertragenen Daten existieren. D.h., es muß beispielsweise festgelegt sein,
- daß die Daten, die zusammen mit dem Code 0000 übertragen werden, den Wert einer Variable A darstellen,
- daß die Daten, die zusammen mit dem Code 0001 übertragen werden, angeben, ob eine Variable B größer oder kleiner als ein bestimmter Schwellenwert ist,
- daß die Daten, die zusammen mit dem Code 0010 übertragen werden, angeben, zum wievielten Mal gerade eine bestimmte Schleife durchlaufen wird,
usw.

Mit welchem Code die der Schnittstelle SS vom Core C zugeführten Daten aus der programmgesteuerten Einheit zusammen ausgegeben werden wird letztlich durch den Core C, genauer gesagt, durch den darin ausgeführten Befehl bestimmt, der den Datentransfer zu Schnittstelle SS veranlaßt.

Hierzu existieren zwei Möglichkeiten. Die erste Möglichkeit besteht darin, daß der Core C die eigentlich auszugebenden Daten zusammen mit einem die Bedeutung der Daten spezifizierenden Code zur Schnittstelle SS überträgt, wobei der Code der selbe Code wie oder ein anderer Code als der Code sein kann, der den aus der programmgesteuerten Einheit ausgegebenen Daten beigefügt wird.

Die zweite Möglichkeit besteht darin, daß es von der Bedeutung der vom Core C an die Schnittstelle SS übertragenen Daten abhängig gemacht wird, an welche Stelle innerhalb der Schnittstelle SS die betreffenden Daten geschrieben werden. In diesem Fall veranlaßt das Programm beispielsweise,
- daß Daten, deren Inhalt der Wert einer Variable A ist, in ein Register X0 der Schnittstelle SS transferiert werden,
- daß Daten, deren Inhalt angibt, ob eine Variable B größer ist als ein bestimmter Schwellenwert, in ein Register X1 der Schnittstelle transferiert werden,
usw.

Dann kann die Schnittstelle SS den Code bestimmen, der zusammen mit den aus der programmgesteuerten Einheit auszugebenden Daten ausgegeben werden muß. Beispielsweise kann
- den Daten, die im Register X0 stehen, der Code 0000 beigefügt werden,
- den Daten, die im Register X1 stehen, der Code 0001 beigefügt werden,
usw.

Die Verwendung von Registern als Puffer für die vom Core C ausgegebenen Trace-Informationen erweist sich als vorteilhaft, weil dadurch keine zusätzlichen Datentransfers über die Systembusse BUS1 und BUS2 erfolgen müssen. Prinzipiell kann die Zwischenspeicherung der Trace-Informationen auch in einer beliebigen anderen Speichereinrichtung erfolgen, wobei diese Speichereinrichtung nicht zwangsläufig Bestandteil der Schnittstelle SS ist.

Die Messages, die die Schnittstelle SS aus den vom Core C erhaltenen Daten generiert und ausgibt, ist eine sogenannte vendor defined message, wobei im (6 Bits umfassenden) Header der Message festgelegt ist, um welche Art von Message es sich handelt, und wobei im Datenteil der Message die vom Core erhaltenen Daten und der die Bedeutung der betreffenden Daten angebende Code enthalten sind.

Durch die zumindest teilweise Festlegung der auszugebenden Trace-Informationen durch das von der programmgesteuerten Einheit ausgeführte Programm kann die Menge an Trace-Informationen, die ausgegeben werden muß, um auftretende Fehler lokalisieren und beheben zu können, minimiert werden. Durch herkömmliche Debug-Ressourcen ist es entweder überhaupt nicht oder nur mit einem immensen Aufwand möglich, die ausgegebenen Trace-Informationen auf die Trace-Informationen zu beschränken, deren Ausgabe bei der vorliegend beschriebenen programmgesteuerten Einheit durch den Core C veranlaßt wird.

Darüber hinaus können die Bedingungen, unter welchen der Core C Trace-Informationen an die Schnittstelle SS übermittelt, beliebig komplex sein; bei herkömmlichen programmgesteuerten Einheiten ist die Komplexität der Bedingungen, unter welchen aus der programmgesteuerten Einheit Trace-Informationen ausgegeben werden, durch die Anzahl und die Verschaltung der in den Debug-Ressourcen vorhandenen Komparatoren und Vergleichsmasken beschränkt.

Unabhängig hiervon ermöglicht es die Trace-Informations-Generierung durch den Core C, die Debug-Ressourcen zu vereinfachen. Insbesondere kann die Anzahl der für Adreß-, Daten-, und Steuersignalvergleich vorzusehenden Komparatoren und Vergleichsmasken reduziert werden. Sofern die Ausgabe von Trace-Informationen von komplexeren Bedingungen abhängig gemacht werden soll, kann die Trace-Informations-Generierung ja durch das von der programmgesteuerten Einheit ausgeführte Programm erfolgen.

Die Befehle, durch welche veranlaßt wird, daß während des Debuggens Trace-Informationen zur Schnittstelle SS übertragen werden, sind vorzugsweise auch in dem Programm enthalten, das auf der programmgesteuerten Einheit ausgeführt wird, wenn kein Debug-Vorgang stattfindet. D.h., das während des Debuggens ausgeführte Programm ist vorzugsweise genau das Programm, das auch im normalen Betrieb der programmgesteuerten Einheit ausgeführt wird. Dadurch kann erreicht werden, daß sich die programmgesteuerte Einheit während des Debuggens exakt so verhält wie es sonst der Fall ist.
Zusätzlich oder alternativ ist es auch möglich, daß durch das von der programmgesteuerten Einheit ausgeführte Programm "nur" die Bedingungen überprüft werden, unter welchen Trace-Informationen auszugeben oder zu speichern sind, und daß dann, wenn bei der Ausführung der die Bedingung überprüfenden Befehle festgestellt wird, daß die Bedingung erfüllt ist, die Debug-Ressourcen DR zur Ausgabe der in diesem Fall auszugebenden Trace-Information veranlaßt werden.

Es ist ferner möglich, daß das vom Core C ausgeführte Programm "nur" festlegt, welche Trace-Informationen beim Eintreten einer bestimmten Bedingung auszugeben oder zu speichern sind, und daß die Debug-Ressourcen DR zur Ausgabe dieser Informationen veranlaßt werden. Dabei kann die Überprüfung der Bedingung, unter welcher die Ausgabe dieser Trace-Information zu erfolgen hat, entweder durch die Debug-Ressourcen DR oder durch das vom Core C ausgeführte Programm (oder durch eine sonstige Einrichtung) erfolgen.

Vorzugsweise ist der Core C so aufgebaut, daß für die Ausführung der Befehle, die die Übertragung von Trace-Informationen zur Schnittstelle SS veranlassen, keinen eigenen Taktzyklus benötigen. Dies kann beispielsweise dadurch geschehen, daß für diese Befehle eine eigene Ausführungseinheit reserviert ist.

Als vorteilhaft kann es sich auch erweisen, wenn in der Schnittstelle SS überwacht wird, ob die Speichereinrichtungen, in welche der Core C und/oder die Debug-Ressourcen die aus der programmgesteuerten Einheit auszugebenden Trace-Informationen schreiben, überlaufen (ob noch nicht ausgegebene Trace-Informationen durch neue Trace-Informationen überschrieben werden oder neue Trace-Informationen mangels Möglichkeiten zur Speicherung nicht angenommen werden können. Wenn festgestellt wird, daß dies geschieht oder zu geschehen droht, werden vorzugsweise Maßnahmen ergriffen, die dies verhindern oder die externe Einrichtung, an welche die Trace-Informationen (die diese enthaltenden Messages) ausgegeben werden hiervon in Kenntnis setzen. Dies kann beispielsweise dadurch geschehen,
- daß der Core angehalten wird, wenn die besagten Speichereinrichtungen nicht mehr aufnahmefähig sind, oder
- daß an die externe Einrichtung eine Fehlermeldung ausgegeben wird, durch welche signalisiert wird, daß Trace-Informationen verloren gegangen sind.

Im letztgenannten Fall könnte vorgesehen werden, der externen Einrichtung die Anzahl und die Art der Trace-Informationen mitzuteilen, die verloren gegangen sind.

Die programmgesteuerte Trace-Informations-Generierung erfordert es nicht, daß zusätzlich Debug-Ressourcen DR vorhanden sind. Gleichwohl wird es sich jedoch im allgemeinen als vorteilhaft erweisen, wenn die programmgesteuerte Einheit Debug-Ressourcen enthält. Diese Debug-Ressourcen können aber einfacher und kleiner aufgebaut werden als Debug-Ressourcen in herkömmlichen programmgesteuerten Einheiten (ohne programmgesteuerte Trace-Informations-Generierung).

Durch die programmgesteuerte Trace-Informations-Generierung ist es unabhängig von den Einzelheiten der praktischen Realisierung mit geringem Aufwand möglich, die Menge der Trace-Informationen, die ausgegeben werden muß, um in der programmgesteuerten Einheit auftretende Fehler zu lokalisieren und zu beheben zu können, gering zu halten.

### Bezugszeichenliste

- C: Core
- DR: Debug-Ressourcen
- Px: Peripherieeinheiten
- SS: Schnittstelle
- Sx: Speichereinrichtungen

## Patentansprüche

1. Programmgesteuerte Einheit, durch welche ausgewählte Adressen, Daten, und/oder Steuersignale umfassende Trace-Informationen, mit Hilfe welcher sich der Verlauf der innerhalb der programmgesteuerten Einheit ablaufenden Vorgänge verfolgen läßt, aus der programmgesteuerten Einheit ausgegeben oder in dieser gespeichert werden, wobei die auszugebenden oder zu speichernden Trace-Informationen und/oder der Zeitpunkt der Ausgabe oder der Speicherung der Trace-Informationen zumindest teilweise durch das von der programmgesteuerten Einheit ausgeführte Programm bestimmt werden,
**dadurch gekennzeichnet,**
**daß** die aus der programmgesteuerten Einheit ausgegebenen oder in dieser gespeicherten Trace-Informationen zusammen mit einem von der durch die Trace-Informationen repräsentierten Information abhängenden Code ausgegeben bzw. gespeichert werden.

2. Programmgesteuerte Einheit nach Anspruch 1,
**dadurch gekennzeichnet,**
**daß** das von der programmgesteuerten Einheit ausgeführte Programm Befehle enthält, durch welche auszugebende Informationen repräsentierende Daten zu einer die Daten aus der programmgesteuerten Einheit ausgebenden oder in dieser speichernden Einrichtung transferiert werden.

3. Programmgesteuerte Einheit nach Anspruch 2,
**dadurch gekennzeichnet,**
**daß** das Transferziel von der durch die Daten repräsentierten Information abhängt.

4. Programmgesteuerte Einheit nach Anspruch 2,
**dadurch gekennzeichnet,**
**daß** die Daten zusammen mit einem von der durch die Daten repräsentierten Information abhängenden Code transferiert werden.

5. Programmgesteuerte Einheit nach einem der vorhergehenden Ansprüche,
**dadurch gekennzeichnet,**
**daß** die programmgesteuerte Einheit Debug-Ressourcen (DR) enthält, die ausgewählte Zustände oder Vorgänge innerhalb der programmgesteuerten Einheit repräsentierende Trace-Informationen ausgeben können.

6. Programmgesteuerte Einheit nach Anspruch 5,
**dadurch gekennzeichnet,**
**daß** das von der programmgesteuerten Einheit ausgeführte Programm Befehle enthält, durch welche eine Bedingung überprüft wird, bei deren Vorliegen Trace-Informationen auszugeben oder zu speichern sind, und daß dann, wenn bei der Ausführung dieser Befehle festgestellt wird, daß die zu überprüfende Bedingung erfüllt ist, dieser Umstand den Debug-Ressourcen (DR) signalisiert wird.

7. Programmgesteuerte Einheit nach Anspruch 5 oder 6,
**dadurch gekennzeichnet,**
**daß** das von der programmgesteuerten Einheit ausgeführte Programm Befehle enthält, durch welche die Debug-Ressourcen (DR) dazu veranlaßbar sind, Trace-Informationen auszugeben oder zu speichern.

8. Programmgesteuerte Einheit nach einem der Ansprüche 5 bis 7,
**dadurch gekennzeichnet,**
**daß** das von der programmgesteuerten Einheit ausgeführte Programm Befehle enthält, durch welche in den Debug-Ressourcen (DR) einstellbar ist, welche Trace-Informationen sie auszugeben öder zu speichern haben.

## Claims

1. Program-controlled unit which outputs trace information comprising selected addresses, data and/or control signals, which can be used to track the progress of the operations taking place within the program-controlled unit, from the program-controlled unit or stores these items therein, where the trace information to be output or stored and/or the time of output or storage of the trace information is/are determined at least partly by the program executed by the program-controlled unit,
**characterized**
**in that** the trace information which is output from the program-controlled unit or is stored therein is output or stored together with a code which is dependent on the information represented by the trace information.

2. Program-controlled unit according to Claim 1,
**characterized**
**in that** the program executed by the program-controlled unit contains instructions which transfer data representing information which is to be output to a device which outputs the data from the program-controlled unit or stores them therein.

3. Program-controlled unit according to Claim 2,
**characterized**
**in that** the transfer destination is dependent on the information represented by the data.

4. Program-controlled unit according to Claim 2,
**characterized**
**in that** the data are transferred together with a code which is dependent on the information represented by the data.

5. Program-controlled unit according to one of the preceding claims,
**characterized**
**in that** the program-controlled unit contains debug resources (DR) which are able to output trace information representing selected states or operations within the program-controlled unit.

6. Program-controlled unit according to Claim 5,
**characterized**
**in that** the program executed by the program-controlled unit contains instructions which check a condition whose presence requires that trace information be output or stored, and in that if, during execution of these instructions, it is established that the condition which is to be checked is satisfied then this circumstance is signalled to the debug resources (DR).

7. Program-controlled unit according to Claim 5 or 6,
**characterized**
**in that** the program executed by the program-controlled unit contains instructions which prompt the debug resources (DR) to output or store trace information.

8. Program-controlled unit according to one of Claims 5 to 7,
**characterized**
**in that** the program executed by the program-controlled unit contains instructions which can set the content of the debug resources (DR) to determine what trace information they need to output or store.

## Revendications

1. Unité à commande programmée, dans laquelle des informations de traçage comprenant des adresses, données et/ou signaux de commande sélectionné(e)s, informations à l'aide desquelles on peut suivre l'évolution des processus qui se déroulent à l'intérieur de l'unité à commande programmée, sont sorties de l'unité à commande programmée ou mémorisées dans celle-ci, sachant que les informations de traçage à éditer ou à mémoriser, et/ou l'instant d'édition ou de mémorisation des informations de traçage, sont déterminés au moins en partie par le programme exécuté par l'unité à commande programmée, **caractérisée en ce que** les informations de traçage sorties de l'unité à commande programmée ou mémorisées dans celle-ci sont éditées ou mémorisées conjointement avec un code fonction de l'information représentée par les informations de traçage.

2. Unité à commande programmée selon la revendication 1, **caractérisée en ce que** le programme exécuté par l'unité à commande programmée contient des instructions par lesquelles des données représentant les informations à éditer sont transférées vers un dispositif sortant les données de l'unité à commande programmée ou les mémorisant dans celle-ci.

3. Unité à commande programmée selon la revendication 2, **caractérisée en ce que** la destination du transfert dépend de l'information représentée par les données.

4. Unité à commande programmée selon la revendication 2, **caractérisée en ce que** les données sont transférées conjointement avec un code fonction de l'information représentée par les données.

5. Unité à commande programmée selon l'une des revendications précédentes, **caractérisée en ce que** l'unité à commande programmée contient des ressources de débogage (DR) qui peuvent éditer des informations de traçage représentant des états ou processus sélectionnés à l'intérieur de l'unité à commande programmée.

6. Unité à commande programmée selon la revendication 5, **caractérisée en ce que** le programme exécuté par l'unité à commande programmée contient des instructions par lesquelles on vérifie une condition en présence de laquelle des informations de traçage doivent être éditées ou mémorisées, et **en ce que**, si l'on constate lors de l'exécution de ces instructions que la condition à vérifier est remplie, cette situation est signalée aux ressources de débogage (DR).

7. Unité à commande programmée selon la revendication 5 ou 6, **caractérisée en ce que** le programme exécuté par l'unité à commande programmée contient des instructions par lesquelles les ressources de débogage (DR) sont amenées à éditer ou mémoriser des informations de traçage.

8. Unité à commande programmée selon l'une des revendications 5 à 7, **caractérisée en ce que** le programme exécuté par l'unité à commande programmée contient des instructions par lesquelles on peut régler, dans les ressources de débogage (DR), les informations de traçage que celles-ci doivent éditer ou mémoriser.
